# EUROPÄISCHE PATENTSCHRIFT

(11) **EP 0 882 645 B1**
(45) Veröffentlichungstag und Bekanntmachung des Hinweises auf die Patenterteilung: **20.02.2002**
(21) Anmeldenummer: 98108025.2
(22) Anmeldetag: 02.05.1998
(51) Int. Cl.: B62K 23/04

(54) **Drehgriffschalter für Fahrradgetriebe**
Twist grip for a bicycle gear shift
Poignée tournante pour le changement de vitesse de bicyclette

(30) Priorität: 04.06.1997 DE 19723346
(43) Veröffentlichungstag der Anmeldung: 09.12.1998
(73) Patentinhaber: SRAM Deutschland GmbH, 97424 Schweinfurt (DE)
(72) Erfinder: Arbeiter, Markus, Dipl.-Ing., 97070 Würzburg (DE)

(56) Entgegenhaltungen:
- EP-A- 0 759 393
- DE-A- 4 420 125
- US-A- 5 588 925

## Beschreibung

Die Erfindung betrifft einen Schalter für die Betätigung von Getrieben an Fahrrädern, insbesondere einen Drehgriffschalter zur Montage an Lenkstangen gemäß dem Oberbegriff des Anspruchs 1.

Mit der DE 44 20 125 A1 ist ein Drehgriffschalter bekannt geworden, bei welchem ein Griffgehäuse mit einem Drehring in der Weise verbunden ist, daß das Griffgehäuse aus zwei Halbschalen besteht und bei seiner Montage einen am Drehring befestigten Mitnehmer axial festlegt, wodurch beide, nämlich das Griffgehäuse und der Drehring in axialer Richtung miteinander verbunden sind. Nach dem Aufschieben des Griffgehäuses auf das Lenkerende läßt sich der Drehring infolge der axialen Fügeverbindung nicht mehr lösen.

Der in dieser Erfindung vorgeschlagene Drehgriffschalter verwendet zur Befestigung der Gehäuseteile, nämlich eines feststehenden Gehäuses mit einem verdrehbaren Gehäuse, ebenfalls eine Fügeverbindung: Das feststehende Gehäuse weist einen zylindrischen Fortsatz mit einem Außenzylinder auf, an dessen stirnseitigem Ende Bajonetthaken angeordnet sind, welche bei der Montage mit Ausnehmungen zusammenwirken, die an einem Innenzylinder des verdrehbaren Gehäuses angeordnet sind. Nach Zusammenschieben der beiden Gehäuseteile kann durch einfaches Verdrehen derselben gegeneinander eine axiale Sicherung durch Sperrung über die Bajonetthaken an der stirnseitigen Planfläche des verdrehbaren Gehäuses erreicht werden, so daß die Gehäuseteile dann nicht mehr voneinander in axialer Richtung gelöst werden können, wenn sie um einen bestimmten Winkelbetrag bis zu einem Einrastpunkt gegeneinander verdreht worden sind. Von Vorteil ist das Zusammenwirken des Innenzylinders des verdrehbaren Gehäuses mit dem Außenzylinder des feststehenden Gehäuses in sofern, als diese miteinander eine Lagerstelle bilden, welche unabhängig von ihrer Befestigung auf der Lenkstange wirkt. Der Einrastpunkt hat den Vorteil, daß von hier aus der eigentliche Schaltweg beginnen kann, wobei ausgeschlossen wird, daß sich die Schalter wieder lösen können, wenn beim Rückwärtsdrehen versucht wird, den Einrastpunkt zu überwinden. Abgesehen von der hier nicht dargestellten Befestigungseinrichtung an der Lenkstange sind alle Funktionen, die zum Betätigen der Fahrradgetriebe sowie zum Befestigen und Lagern der Gehäuse miteinander erforderlich sind, in den beiden Kunststoffgehäusen enthalten. Der Seilzug läßt sich im montierten Zustand des Schalters am Fahrrad bequem auswechseln und der Schalter weist in axialer Richtung im montierten Zustand eine sehr geringe Baulänge auf, wodurch der Schalter auch an geschwungenen Lenkstangen ohne besondere Hilfsmittel montierbar ist.

Die vorbeschriebenen Vorteile des Schalters sind das Ergebnis der Lösung der folgenden Aufgabe: Erstellung eines kostengünstigen Drehgriffschalters, der nicht mehr demontierbar zu sein braucht, sofern der mit ihm verbundene Seilzug austauschbar ist.

Die Lösung der Aufgabe geht aus dem kennzeichnenden Teil des Anspruchs 1 sowie aus den Unteransprüchen hervor. Ein Ausführungsbeispiel eines kostengünstigen Drehgriffschalters wird in den anliegenden Zeichnungen erläutert. Es zeigen:
- Fig. 1: ein auf einer Lenkstange eines Fahrrades montierbares feststehendes Gehäuse mit einem Außenzylinder, an dessen Stirnseite Bajonetthaken angeordnet sind;
- Fig. 2: ein verdrehbares Gehäuse mit einem Innenzylinder und Ausnehmungen zur axialen Montage auf dem feststehenden Gehäuse gem. Fig. 1;
- Fig. 3: das feststehende Gehäuse und das verdrehbare Gehäuse in Montagestellung, in welcher eine Nase des verdrehbaren Gehäuses in Montagedrehrichtung gesehen, vor einer federnden Zunge des feststehenden Gehäuses angeordnet ist;
- Fig. 4: die Anordnung des Schalters gemäß Fig. 3, wobei die Nase durch Verdrehen des verdrehbaren Gehäuses die federnde Zunge überlaufen hat in der Stellung eines Einrastpunktes.

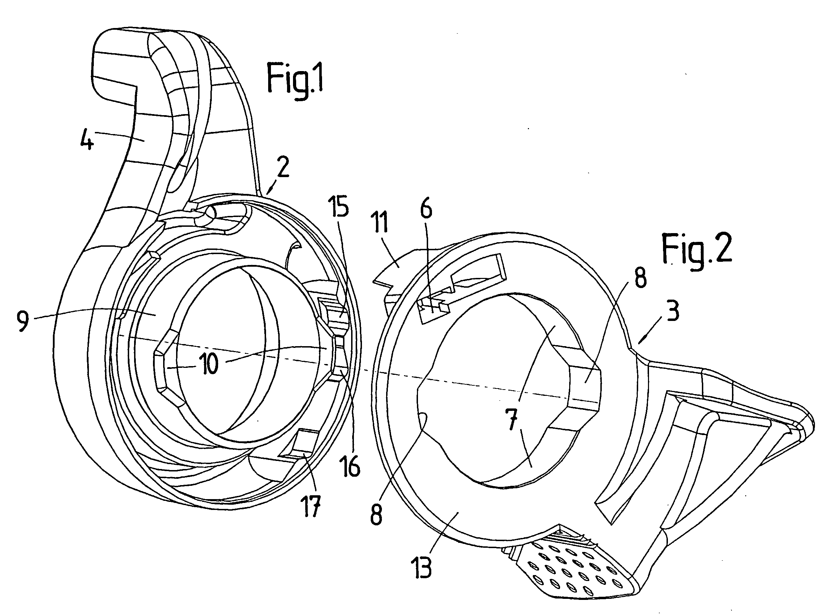

Ein Schalter 1, insbesondere ein Drehgriffschalter zur Betätigung von Fahrradgetrieben besteht aus einem feststehenden Gehäuse 2 und einem verdrehbaren Gehäuse 3, wobei das feststehende Gehäuse 2 einen Außenzylinder 9 mit Bajonetthaken 10 an des Stirnseite des Außenzylinders 9 aufweist. Gemäß Fig. 1 ist das feststehende Gehäuse mit einem Ansatz 4 perspektivisch in der Weise dargestellt, daß der Außenzylinder 9 mit seinen Bajonetthaken 10 in Richtung auf das verdrehbare Gehäuse 3 gemäß Fig. 2 weist, wobei das verdrehbare Gehäuse 3 mit einem Innenzylinder 7 und Ausnehmungen 8 in einer Stellung dargestellt ist, die der Montagestellung entspricht, sofern das verdrehbare Gehäuse 3 gegen das feststehende Gehäuse 2 entlang einer gemeinsamen Mittellinie verschoben wird. Bei dieser Verschiebung durchwandern die Bajonetthaken 10 am feststehenden Gehäuse 2 die Ausnehmungen 8 am verdrehbaren Gehäuse 3 und erscheinen auf einer gegenüberliegenden Planfläche 13 des verdrehbaren Gehäuses 3 und erlauben so eine Verdrehung der beiden Gehäuse 2 und 3 gegeneinander.

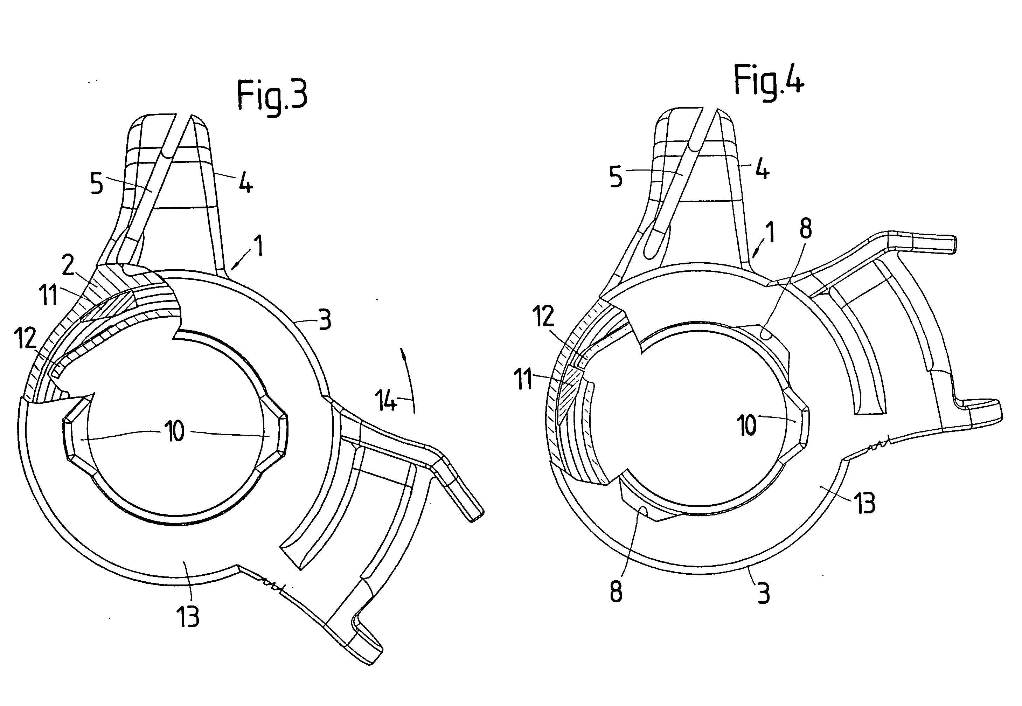

In dieser Position ist der Schalter 1 gemäß Fig. 3 dargestellt, wobei eine Verdrehung noch nicht stattgefunden hat. Mit dem verdrehbaren Gehäuse 3 ist nämlich eine Nase 11 verbunden, welche bei einer Verdrehung des verdrehbaren Gehäuses 3 gegenüber dem feststehenden Gehäuse 2 in einer Drehrichtung 14 im Gegenuhrzeigersinn in Richtung auf eine federnde Zunge 12 bewegt wird, welche mit dem feststehenden Gehäuse 2 verbunden ist. Bei Verdrehung des verdrehbaren Gehäuses 3 gegenüber dem feststehenden Gehäuse 2 in Drehrichtung 14 überfährt die Nase 11 die federnde Zunge 12 bis zu einem Einrastpunkt, bei welchem die federnde Zunge 12 in ihre Ausgangsstellung zurückschnappt, nachdem die Nase 11 diese federnde Zunge 12 überfahren hat, wie aus Fig. 4 ersichtlich ist. In dieser Position hat sich die Ausnehmung 8 unter den Bajonetthaken 10 um mindestens die Breite der Ausnehmung 8 hinweg verdreht.

Der Innenzylinder 7 am verdrehbaren Gehäuse 3 bildet mit dem Außenzylinder 9 am feststehenden Gehäuse 2 eine Lagerstelle, um die das verdrehbare Gehäuse 3 verdrehbar ist, und zwar ausgehend vom Einrastpunkt in der Drehrichtung 14. Beim Rückdrehen des verdrehbaren Gehäuses 3 kann der Einrastpunkt erreicht aber nicht überfahren werden. Der auf diese Weise gebildete Schaltweg kann noch durch Rasten 15,16,17 unterteilt werden, die im feststehenden Gehäuse 2angeordnet sind, und in welche ein hier nicht gezeigtes Rastelement beim Schalten von einem Gang zum nächsten einrastet.

Der Ansatz 4 am feststehenden Gehäuse 2 weist einen Schlitz 5 auf, in welchem ein Seilzug zur Betätigung der Fahrradgetriebe geführt wird. In Verlängerung dieses Schlitzes nach radial innen weist das verdrehbare Gehäuse 3 in der Montagestellung des Einrastpunktes einen Schacht 6 auf, in welchen der Nippel dieses Seilzuges aus der Richtung des Schlitzes 5 einlegbar und befestigbar ist.

Der Schaltbereich, beginnend am Einrastpunkt, kann beliebig weit mit beliebig vielen Rasten 15,16,17... ausgelegt werden, so daß auch Fahrradgetriebe mit einer Vielzahl von Gängen mit dem vorgeschlagenen kostengünstigen Schalter 1 geschaltet werden.

## Patentansprüche

1. Schalter (1) für die Betätigung von Getrieben an Fahrrädern, insbesondere Drehgriffschalter zur Montage an Lenkstangen, bestehend aus
* einem mit der Lenkstange verbundenen feststehenden Gehäuse (2) sowie
* aus einem von Hand verdrehbaren und axial mit dem feststehenden Gehäuse (2) festgelegten Gehäuse (3),
* wobei das feststehende Gehäuse (2) und das verdrehbare Gehäuse (3) eine Einheit bilden,
* wobei weiter das feststehende Gehäuse (2) einen Ansatz (4) mit einem Schlitz (5) zur Führung eines Zugseiles aufweist,
**dadurch gekennzeichnet, daß**
* eines der Gehäuse (2,3), insbesondere das verdrehbare Gehäuse (3), einen Innenzylinder (7) mit nach außen weisenden Ausnehmungen (8) und
* das andere der Gehäuse (2,3), insbesondere das feststehende Gehäuse (2), einen Außenzylinder (9) mit Bajonetthaken (10) an seiner axial äußeren Stirnfläche aufweisen, wobei
* die Bajonetthaken (10) in Axialprojektion gesehen ein Profil aufweisen, das mit dem der Ausnehmungen (8) übereinstimmen kann,
* wobei ferner das verdrehbare Gehäuse (3) mit seinem Innenzylinder (7) auf dem Außenzylinder (9) des feststehenden Gehäuses (2) aufschiebbar ist und eine Lagerstelle bildet,
* wobei schließlich durch Verdrehen des verdrehbaren Gehäuses (3) gegenüber dem feststehenden Gehäuse (2) bis zu einem Einrastpunkt die beiden Gehäuse (2,3) unlösbar miteinander verbindbar sind.

2. Schalter nach Anspruch 1,
**dadurch gekennzeichnet,**
**daß** der Einrastpunkt durch das Zusammenwirken einer Nase (11) mit einer federnden Zunge (12) hergestellt wird.

3. Schalter nach Anspruch 2,
**dadurch gekennzeichnet,**
**daß** die Nase (11) an einem der Gehäuse (2,3), vorzugsweise am verdrehbaren Gehäuse (3), und die federnde Zunge (12) am anderen der Gehäuse (2,3), vorzugsweise am feststehenden Gehäuse (2), angeordnet sind.

4. Schalter nach einem der Ansprüche 1 bis 3,
**dadurch gekennzeichnet,**
**daß** der Schaltbereich des verdrehbaren Gehäuses (3) gegenüber dem feststehenden Gehäuse (2) beim Einrastpunkt beginnt und sich durch Einschnappen eines Federelementes an einem der beiden Gehäuse (2,3), vorzugsweise am verdrehbaren Gehäuse (3), in Rasten (15,16,17) am anderen der beiden Gehäuse, vorzugsweise am feststehenden Gehäuse (2), erstreckt.

5. Schalter nach Anspruch 1,
**dadurch gekennzeichnet,**
**daß** die Ausnehmungen (8) des verdrehbaren Gehäuses (3) in der Position des Einrastpunktes gegenüber den Bajonetthaken (10) des feststehenden Gehäuses (2) eine Winkelverdrehung zur axialen Arretierung der Gehäuse (2,3) gegeneinander aufweisen.

## Claims

1. Switch (1) for actuating gear mechanisms on bicycles, in particular twist-grip switch for fitting on handlebars, comprising
• a stationary housing (2), which is connected to the handlebar, and
• a housing (3), which can be rotated manually and is secured axially to the stationary housing (2),
• it being the case that the stationary housing (2) and the rotatable housing (3) form a unit,
• and it also being the case that the stationary housing (2) has an extension (4) with a slot (5) for guiding a pulling cable,
**characterized in that**
• one of the housings (2, 3), in particular the rotatable housing (3), has an inner cylinder (7) with outwardly oriented recesses (8), and
• the other of the housings (2, 3), in particular the stationary housing (2), has an outer cylinder (9) with bayonet hooks (10) on its axially outer end surface,
• it being the case that, as seen in axial projection, the bayonet hooks (10) have a profile which may correspond to that of the recesses (8),
• it also being the case that the rotatable housing (3) can be pushed, by way of its inner cylinder (7), on the outer cylinder (9) of the stationary housing (2) and forms a bearing location,
• and it finally being the case that, by virtue of the rotatable housing (3) being rotated in relation to the stationary housing (2) as far as a latch-in point, the two housings (2, 3) can be connected to one another in a non-releasable manner.

2. Switch according to Claim 1, **characterized in that** the latch-in point is produced by a nose (11) interacting with a resilient tongue (12).

3. Switch according to Claim 2, **characterized in that** the nose (11) is arranged on one of the housings (2, 3), preferably on the rotatable housing (3), and the resilient tongue (12) is arranged on the other of the housings (2, 3), preferably on the stationary housing (2).

4. Switch according to one of Claims 1 to 3, **characterized in that** the switching region of the rotatable housing (3) in relation to the stationary housing (2) begins at the latch-in point and, by virtue of a resilient element being snapped in on one of the two housings (2, 3), preferably on the rotatable housing (3), extends into notches (15, 16, 17) on the other of the two housings, preferably on the stationary housing (2).

5. Switch according to Claim 1, **characterized in that**, in the position of the latch-in point, the recesses (8) of the rotatable housing (3) have been rotated at an angle in relation to the bayonet hooks (10) of the stationary housing (2) in order to arrest the housings (2, 3) axially in relation to one another.

## Revendications

1. Commande (1) pour l'actionnement de transmissions de bicyclettes, en particulier commande à poignée rotative destinée à être montée sur des guidons, constituée de
- un boîtier fixe (2) relié au guidon, ainsi que de
- un boîtier (3) apte à être tourné à la main et fixé axialement au boîtier fixe (2),
- le boîtier fixe (2) et le boîtier rotatif (3) formant une entité,
- et en outre le boîtier fixe (2) présentant un appendice (4) doté d'une fente (5) pour le guidage d'un câble de traction,
**caractérisée en ce que**
- l'un des boîtiers (2, 3), en particulier le boîtier rotatif (3), présente un cylindre intérieur (7) avec des évidements (8) tournés vers l'extérieur, et
- l'autre des boîtiers (2, 3), en particulier le boîtier fixe (2), présente un cylindre extérieur (9) doté de crochets (10) à baïonnette sur sa surface frontale située axialement à l'extérieur,
- les crochets à baïonnette (10) vus en projection axiale présentant un profil qui peut correspondre à celui des évidements (8),
- et en outre le boîtier rotatif (3) pouvant coulisser par son cylindre intérieur (7) sur le cylindre extérieur (9) du boîtier fixe (2) et formant un emplacement de montage,
- et enfin, par rotation du boîtier rotatif (3) par rapport au boîtier fixe (2) jusqu'à un point accrochage élastique, les deux boîtiers (2, 3) peuvent être reliés l'un à l'autre de manière non libérable.

2. Commande selon la revendication 1, **caractérisée en ce que** le point d'accrochage élastique est obtenu par la coopération d'un bec (11) avec une languette à ressort (12).

3. Commande selon la revendication 2, **caractérisée en ce que** le bec (11) est disposé sur l'un des boîtiers (2, 3), de préférence sur le boîtier rotatif (3), et la languette à ressort (12) est disposée sur l'autre des boîtiers (2, 3), de préférence sur le boîtier fixe (2).

4. Commande selon l'une des revendications 1 à 3, **caractérisée en ce que** la plage de commande du boîtier rotatif (3) par rapport au boîtier fixe (2) commence au point d'accrochage élastique et s'étend par accrochage d'un élément à ressort sur l'un des boîtiers (2, 3), de préférence sur le boîtier rotatif (3), dans des cliquets (15, 16, 17) sur l'autre des deux boîtiers, de préférence sur le boîtier fixe (2).

5. Commande selon la revendication 1, **caractérisée en ce que** dans la position du point d'accrochage élastique par rapport aux crochets à baïonnette (10) du boîtier fixe (2), les évidements (8) du boîtier rotatif (3) présentent une rotation angulaire en vue du blocage axial des boîtiers (2, 3) l'un par rapport à l'autre.
